# EUROPÄISCHE PATENTANMELDUNG

(11) **EP 2 109 071 A1**
(43) Veröffentlichungstag der Anmeldung: **14.10.2009**
(21) Anmeldenummer: 09005137.6
(22) Anmeldetag: 08.04.2009
(51) Int. Cl.: G06Q 10/00

(54) **Verfahren zur Steuerung eines Arbeitsablaufes**

(30) Priorität: 11.04.2008 DE 102008018597
(71) Anmelder: Bossert, Daniel, 71735 Eberdingen-Nussdorf (DE)
(72) Erfinder: Bossert, Daniel, 71735 Eberdingen-Nussdorf (DE)
(74) Vertreter: Riedel, Peter

(57) **Zusammenfassung**

Die Erfindung betrifft ein Verfahren zur Steuerung eines Arbeitsablaufes unter Verwendung eines blattförmigen Bogens (1). Der blattförmige Bogen (1) weist eine in optisch lesbarer Weise beschreibbare Oberfläche (2) sowie magnetisierbaren Partikel (3) auf, wobei der blattförmige Bogen (1) mit Daten magnetisch beschreibbar ist. Auf die Oberfläche (2) des blattförmigen Bogens (1) wird ein erster, optisch lesbarer Datensatz (4) aufgeschrieben. Des weiteren wird auf den blattförmigen Bogen (1) ein zweiter Datensatz (5) magnetisch aufgeschrieben, wobei der zweite Datensatz (5) zumindest eine Teilmenge des ersten, optisch lesbaren Datensatzes (4) enthält. Darüber hinaus wird auf den blattförmigen Bogen (1) ein dritter Datensatz (6) magnetisch aufgeschrieben, der Anweisungen zur Steuerung des den ersten und zweiten Datensatz (4, 5) betreffenden Arbeitsablaufes enthält. Der dritte, magnetisch gespeicherte Datensatz (6) wird mindestens einmal gelesen, und der Arbeitsablauf wird nach den im dritten Datensatz (6) enthaltenen, nunmehr gelesenen Anweisungen gesteuert.

## Beschreibung

Die Erfindung betrifft ein Verfahren zur Steuerung eines Arbeitsablaufes unter Verwendung eines blattförmigen Bogens.

Beschriebene bzw. bedruckte blattförmige Bogen werden in einer Vielzahl von Anwendungsfällen eingesetzt, in denen ein Arbeitsablauf einzuhalten ist. Solche blattförmigen Bögen können Bestell- oder Lieferscheine, Rechnungen, Ersatzteillisten, ärztliche Überweisungen, Krankenhausrezepte oder dergleichen sein. Am Beispiel eines Lieferscheins oder anderer warenbegleitender Dokumente wird deutlich, dass ein solcher Lieferschein nicht nur mit die Ware betreffenden Informationen optisch lesbar bedruckt ist, sondern dass er auch die Ware während ihres Verteil- und Lieferprozesses begleitet. Der Verteil- und Lieferprozess beeinhaltet einen komplexen und arbeitsintensiven Arbeitsablauf, der ein hohes Organisationsmaß erfordert.

Auf die Oberfläche des blattförmigen Bogens in Form des beispielhaften Lieferscheines sind in optisch lesbarer Weise Daten aufgedruckt bzw. in anderer Weise aufgeschrieben, die vom jeweiligen Nutzer am jeweiligen Durchlaufort im Klartext gelesen werden können. Die Steuerung des Arbeitsablaufes, hier des Verteil- und Versandprozesses, erfolgt in einem eigenständigen Szenario, welches durch ein Logistiksystem vorgegeben ist. Beim Durchlaufen der verschiedenen Stationen des Arbeitsablaufes ist ein hohes Maß an manueller Tätigkeit erforderlich. Daten wie Lieferadresse etc. müssen vom Bogen ausgelesen und in das Logistiksystem eingegeben werden. Zwischenlagerort, Versandrouten und dergleichen sind zu bestimmen. Der damit verbundene personelle Aufwand ist hoch und kostenintensiv. Das Logistiksystem muss komplex und datenintensiv aufgebaut sein.

Der Erfindung liegt die Aufgabe zugrunde, ein Verfahren zur Steuerung eines Arbeitsablaufes unter Verwendung eines blattförmigen Bogens anzugeben, welches einen deutlich verringerten Aufwand erfordert.

Diese Aufgabe wird durch ein Verfahren mit den Merkmalen des Anspruchs 1 gelöst.

Es wird ein Verfahren zur Steuerung eines Arbeitsablaufes unter Verwendung eines blattförmigen Bogens vorgeschlagen, wobei der blattförmige Bogen eine in optisch lesbarer Weise beschreibbare Oberfläche aufweist, und wobei der blattförmige Bogen mit flächig verteilten magnetisierbaren Partikeln derart versehen ist, dass er mit Daten magnetisch beschreibbar ist, und dass die magnetisch gespeicherten Daten vom blattförmigen Bogen lesbar sind. Das Verfahren umfasst folgende Verfahrensschritte: Auf die Oberfläche des blattförmigen Bogens wird ein erster, optisch lesbarer Datensatz aufgeschrieben. Des weiteren wird auf dem blattförmigen Bogen ein zweiter Datensatz magnetisch aufgeschrieben, wobei der zweite Datensatz zumindest eine Teilmenge des ersten, optisch lesbaren Datensatzes enthält. Darüber hinaus wird auf den blattförmigen Bogen ein dritter Datensatz magnetisch aufgeschrieben, der Anweisungen zur Steuerung des den ersten und zweiten Datensatz betreffenden Arbeitsablaufes enthält. Der dritte, magnetisch gespeicherte Datensatz wird mindestens einmal gelesen, und der Arbeitsablauf wird nach den im dritten Datensatz enthaltenen, nunmehr gelesenen Anweisungen gesteuert.

Das erfindungsgemäße Verfahren erfordert sowohl hinsichtlich des Personaleinsatzes als auch im Hinblick auf die zentral zu verarbeitende Datenmenge einen deutlich verringerten Aufwand. Der Bogen beispielsweise in Form eines Lieferscheines kann weiterhin vom Nutzer in optischer Weise ausgelesen werden. Da aber zumindest eine relevante Teilmenge des ersten, optisch lesbaren Datensatzes auch als zweiter Datensatz magnetisch im Bogen gespeichert ist, kann diese relevante Information auch vollautomatisch mit einem entsprechenden magnetischen Lesegerät ausgelesen werden. Insbesondere aber muss der Nutzer am jeweiligen Durchlaufort nicht die nächsten Schritte des Arbeitsablaufes kreieren oder in einer zentralen Datenbank abfragen. Vielmehr enthält der dritte, magnetisch auf dem Bogen gespeicherte Datensatz diese Anweisungen zur Steuerung des Arbeitsablaufes, wie er für das im zweiten Datensatz beschriebene Produkt oder die Dienstleistung vorgesehen ist. Demnach sind auf dem Bogen gleichermaßen die Angaben zum Produkt bzw. zur Dienstleistung im zweiten Datensatz, als auch die Anweisung zur Steuerung des zugehörigen Arbeitsablaufes im dritten Datensatz in magnetischer Form gespeichert und damit an allen Orten bzw. Arbeitsstationen, die die Ware oder Dienstleistung durchläuft, gleichzeitig und unmittelbar durch magnetisches Auslesen des Bogens verfügbar. Der manuelle Lese- und Schreibaufwand ist ebenso deutlich verringert wie die zentral vorzuhaltenden Datenmengen. Eine Vernetzung der zugeordneten magnetischen Lese- und Schreibvorrichtungen ist nicht zwingend erforderlich, da die relevanten Arbeitsanweisungen nicht zentral abgefragt werden müssen, sondern vom Bogen ausgelesen werden. Einzelne Geräte können off-line betrieben werden.

In vorteilhafter Weiterbildung wird der zweite, magnetisch gespeicherte Datensatz im Laufe des Arbeitsablaufes um Angaben betreffend den Fortschritt des Arbeitsablaufes ergänzt. Beim Auslesen des zweiten Datensatzes in nachfolgenden Arbeitsschritten stehen demnach nicht nur Daten über die Ware bzw. Dienstleistung als solche zur Verfügung, sondern auch Daten über den aktuell erzielten Arbeitsfortschritt. Durch Vergleich des ausgelesenen erzielten Arbeitsfortschrittes mit den Arbeitsanweisungen des dritten Arbeitssatzes kann regelmäßig ein Soll-Ist-Abgleich durchgeführt werden, wodurch die Prozesssicherheit erhöht ist.

Es kann zweckmäßig sein, den zweiten und/oder dritten Datensatz magnetisch im Klartext auf dem Bogen abzuspeichern, wobei also das magnetische Muster in seiner Form derjenigen des optisch lesbaren ersten Datensatzes entspricht. Vorteilhaft wird der zweite und/oder der dritte Datensatz binär auf dem blattförmigen Bogen geschrieben. Hierdurch kann eine große Datenmenge pro Flächeneinheit auf dem Bogen gespeichert werden.

Außerdem ist eine Datenumwandlung in die binäre Datenstruktur des Rechner- und Steuerungssystems nicht mehr erforderlich.

In einer bevorzugten Ausführungsform wird der zweite und/oder der dritte Datensatz codiert auf dem blattförmigen Bogen geschrieben. Nutzung und ggf. auch eine Veränderung der beiden Datensätze sind nur mit entsprechenden Decodiereinrichtungen und Berechtigungen möglich, wodurch Missbrauch, Fälschung oder dergleichen vermieden wird.

Der erste, optisch lesbare Datensatz wird bevorzugt im Klartext auf dem blattförmigen Bogen geschrieben. Dies erlaubt dem Nutzer die optische Kontrolle des Verfahrensablaufes auch ohne technische Hilfsmittel.

In vorteilhafter Weiterbildung sind magnetische Schreibvorrichtungen zum Schreiben zumindest des zweiten Datensatzes und magnetische Lesevorrichtungen zum Lesen des zweiten und des dritten Datensatzes an verschiedenen Orten des Arbeitsablaufes vorgesehen und für einen Datenaustausch miteinander vernetzt, wobei der blattförmige Bogen im Laufe des Arbeitsablaufes die verschiedenen Orte durchläuft und dabei den magnetischen Schreibvorrichtungen und/oder den magnetischen Lesevorrichtungen zugeführt wird. Die Vernetzung der Lese- und Schreibvorrichtungen ermöglicht eine zentrale Verfolgung des Arbeitsablaufes. Einzelne Arbeitsstationen können schon vor Eintreffen des blattförmigen Bogens an den erwarteten nächsten Arbeitsschritt angepasst bzw. darauf vorbereitet werden. Außerdem besteht die Möglichkeit, dass einzelne Arbeitsschritte an Orten initiiert werden, an denen der Bogen bzw. die von ihm begleitete Ware oder Dienstleistung noch nicht, nicht mehr oder überhaupt nicht erscheint.

In einer vorteilhaften Ausführungsform wird ein Datenaustausch zwischen Kombinationsgeräten vorgenommen, die die magnetische Schreibvorrichtung und die magnetische Lesevorrichtung, insbesondere auch eine Druckvorrichtung und/oder eine optische Lesevorrichtung für den ersten Datensatz umfassen. Mit derartigen Kombinationsgeräten können alle magnetisch gespeicherten bzw. optisch lesbar aufgeschriebenen Datensätze in einem Durchgang ausgelesen und/oder verändert bzw. ergänzt werden. Die Tätigkeit des Nutzers beschränkt sich lediglich darauf, den jeweiligen Bogen dem Kombinationsgerät zuzuführen, so dass der Arbeitsaufwand verringert und Handhabungsfehler vermieden sind.

Es kann zweckmäßig sein, dass der dritte Datensatz sämtliche Anweisungen zur Steuerung des Arbeitsablaufes enthält, wobei jedoch eine entsprechend hohe Datenmenge auf dem Bogen zu speichern ist. Bevorzugt enthält der dritte Datensatz nur eine Teilmenge der Anweisungen zur Steuerung des Arbeitsablaufes. Die Gesamtmenge der Anweisungen zur Steuerung des Arbeitsablaufes ist dabei auf einem Zentralrechner abgelegt. Während desjenigen Arbeitsablaufs oder bei Beendigung desjenigen Arbeitsablaufes, der durch die im dritten Datensatz enthaltenen Teilmenge bestimmt ist, wird ein weiterer blattförmiger Bogen mit einem neuen dritten Datensatz generiert, wobei der neue dritte Datensatz eine weitere Teilmenge der Anweisungen zur Steuerung des Arbeitsablaufes enthält. Der neue, nachfolgende blattförmige Bogen kann mit geringem Aufwand beispielsweise in einem der vorstehend beschriebenen Kombinationsgeräte dadurch generiert werden, dass ein preisgünstiger, unbeschriebener Rohbogen in das Gerät eingeführt und dort mit den drei Datensätzen bedruckt bzw. beschrieben wird. Die auf den einzelnen Bogen enthaltenen Datenmengen können auf diese Weise gering gehalten werden, so dass auch der Einsatz von kleinen Bogenformen nach Art eines Adressaufklebers oder dergleichen möglich ist. Sinngemäß das Gleiche gilt auch für den zweiten Datensatz.

Ein Ausführungsbeispiel der Erfindung ist nachfolgend anhand der Zeichnung näher beschrieben. Es zeigen:
- Fig. 1: in einer schematischen Schnittdarstellung einen Bogen zur Verwendung im erfindungsgemäßen Verfahren mit beschreibbaren Oberflächen und mit magnetisierbaren Partikeln zur Aufnahme magnetisch gespeicherter Datensätze;
- Fig. 2: in einer schematischen Draufsicht einen blattförmigen Bogen nach Fig. 1 mit einem aufgedruckten ersten Datensatz und mit magnetisch gespeicherten zweiten und dritten Datensätzen unter Einwirkung einer magnetischen Schreibvorrichtung und einer magnetischen Lesevorrichtung;
- Fig. 3: in einer schematischen Blockdarstellung ein Netzwerk mit Multifunktionsgeräten und einem Zentralrechner zur Steuerung und Verfolgung des vom Bogen nach den Fig. 1 und 2 begleiteten Arbeitsablaufes.

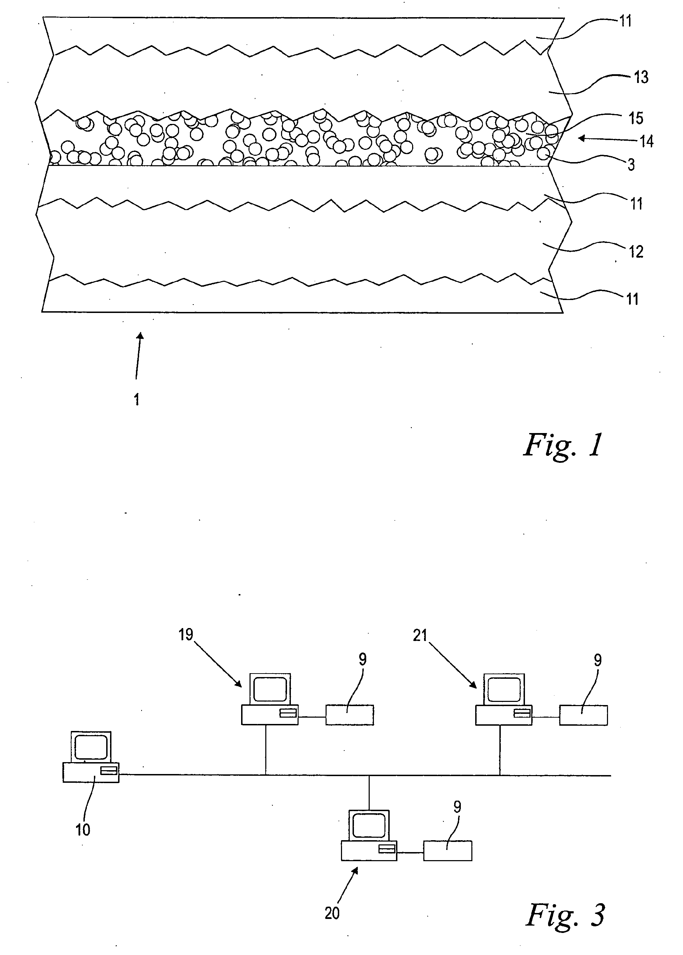

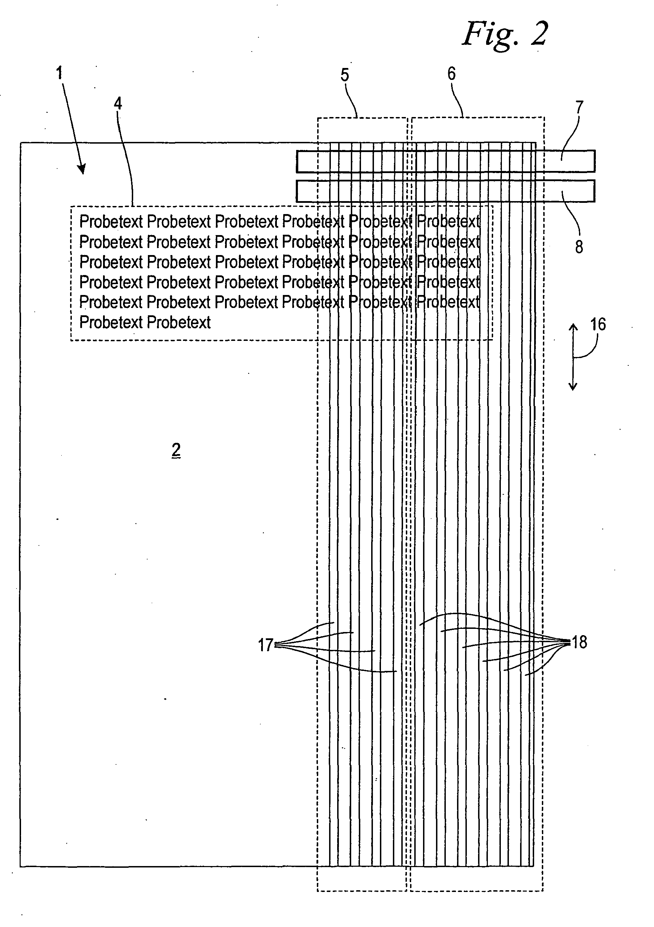

Nach der schematischen Schnittdarstellung in Fig. 1 ist ein im Zusammenhang mit Fig. 2 näher beschriebener blattförmiger Bogen 1 vorgesehen. Der blattförmige Bogen 1 weist zwei sich gegenüberliegende Oberflächen 2 auf, die durch je eine Funktionsbeschichtung 11 gebildet sind. Die Funktionsbeschichtungen 11 sind hier weiße und glatte Beschichtungen, wodurch auf die durch sie gebildeten Oberflächen 2 optisch lesbare Informationen beispielsweise in Form von Buchstaben, Zeichen und Zeichenketten, Mustern, Barcodes oder dergleichen durch Bedrucken, manuelles Schreiben oder dergleichen aufschreibbar sind. Es können auch abweichende Funktionsbeschichtungen 11 mit anderen Farben, Glanzgrad, Oberflächenstrukturen etc. zweckmäßig sein.

Der blattförmige Bogen 1 umfasst eine erste Papierschicht 12 sowie eine zweite Papierschicht 13. Zwischen den beiden Papierschichten 12, 13 ist eine magnetisierbare Schicht in Form einer Beschichtung 14 angeordnet, die aus einem Bindemittel 15 und einer Vielzahl von darin eingebetteten magnetisierbaren Partikeln 3 besteht. Die beiden Papierschichten 12, 13 bilden zusammen mit der magnetisierbaren Beschichtung 14 und den beiden Funktionsbeschichtungen 11 einen fest miteinander verbundenen sandwichartigen Aufbau. Die flächig über den gesamten Bogen 1 verteilte magnetisierbare Beschichtung 14 erlaubt ein magnetisches Beschreiben des Bogens 1 mit Daten, die dann auch mit weiter unten näher beschriebenen Mitteln vom Bogen 1 auslesbar sind.

Die magnetisierbare Beschichtung 14 umfasst eine Kaolin/SBR-Latexschicht, in der die magnetisierbaren Partikel 3 bevorzugt aus Eisenoxid eingebettet sind. Die magnetisierbaren Partikel 3 weisen dabei typischerweise eine Flächendichte von etwa 0,1 g/m² bis 0,4 g/m² bei einer Korngröße von < 3 µm auf. Anstelle von Eisenoxid kann auch Mn-Zn-Ferrit oder anderes geeignetes permanentmagnetisches Material verwendet werden. Die magnetisierbaren Partikel 3 sind in der magnetisierbaren Beschichtung 14 fest eingebettet, so dass sich ihre räumliche Ausrichtung unter Einwirkung eines Magnetfeldes nicht verändern kann. Das Abspeichern von magnetischer Information in der magnetisierbaren Beschichtung 14 erfolgt mittels geeigneter, weiter unten im Zusammenhang mit den Fig. 2 und 3 beschriebener magnetischer Schreibvorrichtungen 7, die ein musterartig gesteuertes Magnetfeld auf den Bogen 1 aufbringen, in dessen Folge sich eine magnetische Polarisierung in den magnetisierbaren Partikeln 3 in Form des aufgeschriebenen Musters einstellt. Durch erneuten Einsatz der magnetischen Schreibvorrichtungen 7 (Fig. 2, 3) kann diese magnetisch im Bogen 1 gespeicherte Information bei Bedarf verändert, ergänzt und ggf. auch gelöscht werden.

Der Darstellung nach Fig. 1 ist noch zu entnehmen, dass die zweite Papierschicht 13 unmittelbar an die magnetisierbare Beschichtung 14 angrenzt, während zwischen der ersten Papierschicht 12 und der magnetisierbaren Beschichtung 14 noch eine weitere Funktionsbeschichtung 11 angeordnet ist. Es kann auch zweckmäßig sein, auf diese weitere Funktionsbeschichtung 11 zu verzichten oder aber eine solche auch zwischen der zweiten Papierschicht 13 und der magnetisierbaren Beschichtung 14 vorzusehen. Die sandwichartige Anordnung der magnetisierbaren Beschichtung 14 zwischen den beiden Papierschichten 12, 13 führt dazu, dass die aufgrund der magnetisierbaren Partikel 3 dunkel gefärbte Beschichtung 14 für den Nutzer nicht sichtbar ist. Es kann aber auch zweckmäßig sein, nur eine Papierschicht 12, 13 vorzusehen, die einseitig mit der magnetisierbaren Beschichtung 14 beschichtet ist, wobei letztere bedarfsweise mit einer Funktionsbeschichtung 11 zur undurchsichtigen Abdeckung und für eine optisch lesbare Beschriftung versehen sein kann.

Fig. 2 zeigt in einer schematischen Draufsicht einen blattförmigen Bogen 1 entsprechend der Querschnittsdarstellung nach Fig. 1. Auf eine der Oberflächen 2 des blattförmigen Bogens 1 ist ein erster, optisch lesbarer Datensatz 4 aufgeschrieben, der im gezeigten Ausführungsbeispiel im Klartext zur optischen Erkennung durch den Nutzer ohne technische Hilfsmittel ausgeführt ist. Es können aber auch verschlüsselte Zeichenketten, Barcodes oder dergleichen aufgeschrieben sein. Der erste Datensatz 4 kann beispielsweise mit einem herkömmlichen Laserdrucker oder Tintenstrahldrucker aufgedruckt oder manuell mit Kugelschreiber, Füller, Filz- oder Bleistift aufgeschrieben sein.

Der erste Datensatz 4 enthält unter anderem Angaben zu einer Ware und/oder einer Dienstleistung oder dergleichen. Der blattförmige Bogen 1 begleitet diejenige Ware bzw. Dienstleistung, die im ersten Datensatz 4 beschrieben ist, während eines bestimmten Prozesses bzw. Arbeitsablaufes. Ein solcher Prozess bzw. Arbeitsablauf kann die Serviceleistung beispielsweise einer Krankenkasse im Zusammenhang mit der Beschaffung von Medikamenten oder ärztlichen Dienstleistungen sein. Genauso kommen logistische Prozesse im Zusammenhang mit der Bestellung, Lieferung und Bezahlung sowie auch Herstellung von Waren, Ersatzteilbeschaffung, Reparatur- und Serviceaufträge, Finanzdienstleistungen, Brief- und Paketzustellungen, Wahlen, Aktenverwaltung, Tickets für Veranstaltungen und Reisen oder dergleichen in Betracht.

Es ist eine schematisch angedeutete magnetische Schreibvorrichtung 7 vorgesehen, die den Bogen 1 während der Benutzung zumindest teilweise übergreift, und wobei die magnetische Schreibvorrichtung 7 und der Bogen 1 entsprechend einem Doppelpfeil 16 relativ zueinander und quer zur Längserstreckung der magnetischen Schreibvorrichtung 7 gegeneinander bewegt werden können. Während dieser Relativbewegung wird mittels der magnetischen Schreibvorrichtung 7 eine Anzahl von parallel zueinander verlaufenden Informationsspuren 17 durch Magnetisierung der magnetisierbaren Partikel 3 (Fig. 1) abgelegt, wobei Informationen in den Spuren 17 durch Erzeugung eines entsprechend magnetisierten Musters in binärer und codierter Form abgelegt werden. Sinngemäß das Gleiche gilt auch für die Ablage von weiteren Informationen in weiteren, parallel zu den Informationsspuren 17 verlaufenden Informationsspuren 18. Anstelle der Anordnung von Informationsspuren 17, 18 kann aber auch eine flächige Datenverteilung zweckmäßig sein.

Die in den Informationsspuren 17 abgespeicherten Informationen bilden einen zweiten Datensatz 5, dessen Informationsgehalt zumindest einen Teilmenge des Informationsgehaltes aus dem ersten, optisch lesbaren Datensatz 4 enthält. Relevante Daten des ersten, optisch lesbaren Datensatzes 4 sind damit inhaltlich auch im zweiten Datensatz 5 in magnetisch lesbarer Form abgespeichert.

Die vorgenannten Informationen des ersten und zweiten Datensatzes 4, 5 betreffen Waren, Dienstleistungen oder dergleichen, wie sie weiter oben beispielhaft umrissen sind und die einem Prozess bzw. Arbeitsablauf unterzogen werden sollen. Der dritte, in den Informationsspuren 18 aufgeschriebene Datensatz 6 enthält Anweisungen zur Steuerung des vorgenannten, den ersten und zweiten Datensatz 4, 5 betreffenden Arbeitsablaufes, wie dieser nachfolgend im Zusammenhang mit Fig. 3 näher beschrieben ist.

Des weiteren ist noch eine schematisch angedeutete, magnetische Lesevorrichtung 8 vorgesehen, die ebenso wie die magnetische Schreibvorrichtung 7 bei Bedarf den Bogen 1 über die Breite seiner Informationsspuren 17, 18 übergreift, und mittels dessen die magnetisch in den Informationsspuren 17, 18 gespeicherten zweiten und dritten Datensätze 5, 6 ausgelesen und einer Weiterverarbeitung zugeführt werden können.

Fig. 3 zeigt in schematischer Blockdarstellung ein Informationsnetzwerk, in dem Kombinationsgeräte 9 an verschiedenen Orten 19, 20, 21 untereinander sowie mit einem Zentralrechner 10 für einen elektronischen Datenaustausch vernetzt sind. Die Kombinationsgeräte 9 können herkömmliche Laserdrucker oder Tintenstrahldrucker sein, die um die in Fig. 2 dargestellten Schreib- und Lesevorrichtungen 7, 8 ergänzt sind. Darüber hinaus können sie auch eine als Scanner bezeichnete optische Lesevorrichtung für den ersten Datensatz 4 (Fig. 2) umfassen. Mittels der Druckfunktion kann der erste Datensatz 4 (Fig. 2) erzeugt und auch um weitere, durch den Arbeitsablauf generierte Daten ergänzt werden. Zumindest aber weisen die Kombinationsgeräte 9 je eine magnetische Lesevorrichtung 8 (Fig. 2) auf, mittels derer der zweite und der dritte Datensatz 5, 6 (Fig. 2) gelesen werden kann. Mittels der ebenfalls erforderlichen magnetischen Schreibvorrichtung 7 (Fig. 2) des Multifunktionsgerätes 9 kann zumindest der zweite Datensatz 5 (Fig. 2) geändert bzw. ergänzt werden. Diese Änderungen oder Ergänzungen können aus dem Fortschritt des Arbeitsablaufes nach dem dritten Datensatz 6 abgeleitet werden. Es besteht aber auch die Möglichkeit einer Abfrage von ergänzenden Angaben von einer zentralen Datenstelle, insbesondere des Zentralrechners 10.

Während des Arbeitsablaufes ist eine Änderung bzw. Ergänzung des dritten Datensatzes 6 (Fig. 2) nicht vorgesehen. Jedoch ist es möglich, nach Ablauf einer bestimmten Teilmenge des Arbeitsablaufes einen neuen Bogen 1 (Fig. 2) zu generieren, auf den der zweite Datensatz 5 und der dritte Datensatz 6 magnetisch aufgeschrieben wird, während gleichzeitig auch mit der gewöhnlichen Druckfunktion der erste, optisch lesbare Datensatz 4 aufgedruckt werden kann. Die Kombinationsgeräte 9 sind hier in Verbindung mit je einem Personal Computer (PC) gezeigt. Es kann aber auch zweckmäßig sein, dass die Kombinationsgeräte 9 über eine geeignete, insbesondere integrierte Hardware als eigenständig funktionsfähige Geräte ohne einen solchen PC direkt an das Netzwerk angeschlossen sind.

Anstelle der Kombinationsgeräte 9 kann aber auch die separate Anordnung von magnetischen Schreibvorrichtungen 7 und magnetischen Lesevorrichtungen 8 (Fig. 2) zweckmäßig sein.

Unter gleichzeitigem Bezug auf die Fig. 1, 2 und 3 wird das erfindungsgemäße Verfahren wie folgt durchgeführt: Zunächst wird der blattförmige Bogen 1 auf seiner Oberfläche 2 mit dem ersten Datensatz 4 beschrieben, der Angaben zu einer weiter oben beschriebenen Ware, Dienstleistung oder dergleichen enthält. Des weiteren wird der zweite Datensatz 5 magnetisch auf den blattförmigen Bogen 1 aufgeschrieben, wobei der zweite Datensatz 5 zumindest eine Teilmenge des ersten optisch lesbaren Datensatzes 4 enthält. Außerdem wird noch auf dem blattförmigen Bogen 1 der dritte Datensatz 6 magnetisch aufgeschrieben, wobei der dritte Datensatz 6 Anweisungen zur Steuerung des den ersten und zweiten Datensatz 4, 5 und der die damit verbundene Ware, Dienstleistung oder dgl. betreffenden Arbeitsablaufes enthält. Das Schreiben der Datensätze 4, 5, 6 kann mit separaten Laserdruckern, Tintenstrahldruckern oder dergleichen sowie mit separaten magnetischen Schreibvorrichtungen 7 vorgenommen werden, wird jedoch bevorzugt mittels eines der Kombinationsgeräte 9 vorgenommen. Anschließend durchläuft die Ware, Dienstleistung oder dergleichen in Begleitung des zughörigen blattförmigen Bogens 1 die verschiedenen Orte 19, 20, 21, wobei an diesen Orten 19, 20, 21 verschiedene Schritte des vorgesehenen Arbeitsablaufes durchgeführt werden. Hierzu wird der begleitende Bogen 1 der magnetischen Lesevorrichtung 8 bzw. den Kombinationsgeräten 9 am entsprechenden Ort 19, 20, 21 zugeführt und dabei der zweite Datensatz 5 und der dritte Datensatz 6 ausgelesen.

Anhand des zweiten Datensatzes 5 kann identifiziert werden, welche Ware, Dienstleistung oder dergleichen es sich handelt. Außerdem kann der zweite Datensatz 5 Angaben über den Fortschritt des Arbeitsablaufes enthalten, die herausgelesen und verfügbar gemacht werden. Diese Angaben sind darüber hinaus seitens des Nutzers anhand des optisch lesbaren ersten Datensatzes 4 verifizierbar.

Anhand des ausgelesenen dritten Datensatzes 6 wird der vorgesehene Arbeitsablauf dem System verfügbar gemacht. Insbesondere durch Vergleich mit den Statusangaben im zweiten Datensatz 5 wird der tatsächlich erreichte Arbeitsfortschritt im Arbeitsablauf bestimmt und anhand des dritten Datensatzes 6 zumindest der nächste, möglicherweise aber auch weitere Schritte im Arbeitsablauf ermittelt und in die Wege geleitet.

Im Rahmen eines der nächsten Arbeitsschritte wird der Bogen 1 zusammen mit der zugehörigen Ware, Dienstleistung oder dergleichen zum nächsten Ort 20, 21 mit dem nächsten Schritt des Arbeitsablaufes geleitet. Zuvor wurde der zweite Datensatz 5 mittels der magnetischen Schreibvorrichtung 7, ggf. auch der erste Datensatz 4 mittels eines geeigneten Druckers bzw. des Kombinationsgerätes 9 um Angaben betreffend den erzielten Fortschritt des Arbeitsablaufes ergänzt. Beim Erreichen des neuen Ortes 20, 21 ist diese Information über die dort vorhandene magnetische Lesevorrichtung 8 verfügbar, so dass auch dort in vorstehend beschriebener Weise die nachfolgenden Arbeitsschritte vollautomatisch initiiert und auch ausgeführt werden können.

Die datentechnische Vernetzung der einzelnen Orte 19, 20, 21 untereinander ermöglicht einen gegenseitigen Austausch der magnetisch eingelesenen zweiten und dritten Datensätze 5, 6, so dass vor- und nachbereitende Maßnahmen, ggf. auch eine Prozessüberwachung in diesen Orten 19, 20, 21 im Rahmen des vorgegebenen Arbeitsablaufes durchgeführt werden können, auch ohne dass sich der Bogen 1 in einem dieser Orte 19, 20, 21 befindet.

Eine Prozessüberwachung ist insbesondere durch den mit den Orten 19, 20, 21 vernetzten Zentralrechner 10 vorgesehen. Bei umfänglichen Arbeitsabläufen ist im Zentralrechner 10 dieser Arbeitsablauf in seiner Gesamtheit abgelegt, während jeweils nur eine Teilmenge dieser Anweisungen zur Steuerung des Arbeitsablaufes im dritten Datensatz 6 auf dem Bogen 1 abgelegt ist. Außerdem kann es bei großen Datenmengen betreffend die durch den Bogen 1 begleitete Ware, Diensleistung etc. zweckmäßig sein, nur eine für die nächsten Arbeitschritte relevante Teilmenge davon im ersten und insbesondere im zweiten Datensatz 4, 5 auf dem Bogen 1 abzulegen. Während desjenigen Arbeitsablaufes oder bei bzw. nach Beendigung desjenigen Arbeitsablaufes, der durch die im dritten Datensatz 6 enthaltenen Teilmenge bestimmt ist, kann an einem der Orte 19, 20, 21 ein weiterer blattförmiger Bogen 1 mit einem neuen dritten Datensatz generiert werden, wobei der neue dritte Datensatz eine weitere Teilmenge der Anweisungen zur Steuerung des Arbeitsablaufes enthält. Damit ist es zum Beispiel möglich, den Arbeitsablauf in einzelne Teilabläufe zu unterteilen, die sequenziell nacheinander abgearbeitet werden. Nach bzw. bei Beendigung eines vorangehenden Arbeitsablaufes wird ein neuer blattförmiger Bogen 1 mit einer neuen, nachfolgenden Teilmenge der Anweisungen zur Steuerung des Arbeitsablaufes beispielsweise in einem der Kombinationsgeräte 9 erzeugt. So kann beispielsweise ein konvexer logistischer Vorgang in einzelne, weniger datenintensive Teilvorgänge zerlegt werden. Genauso ist es aber möglich, einzelne Teilmengen des Arbeitsablaufes als Zweige parallel zu verfolgen. Am Beispiel eines Lieferscheines wird deutlich, dass während des Arbeitsablaufes der logistischen Handhabung an einem der Orte 19, 20, 21 beispielsweise ein neuer Bogen 1 in Form von Zollpapieren erzeugt wird, die einen eigenen dritten Datensatz 6 mit spezifischen Anweisungen für diese Teilaufgabe des Arbeitsablaufes enthalten. Diese beispielhaften Zollpapiere oder andere Bogen können in ihrer Teilaufgabe nach dem erfindungsgemäßen Verfahren parallel zum ursprünglichen Verfahrenszweig gehandhabt werden. Die erforderlichen Daten für die genannte zusätzliche Teilmenge der Anweisungen des ansonsten sehr komplexen Arbeitsablaufes können automatisch beim Zentralrechner 10 angefragt werden, wobei die Anweisungen dieser Anfrage sowie auch die Anweisung zur Erzeugung des neuen Bogens 1 im dritten Datensatz 6 des ursprünglichen Bogens 1 enthalten sein können. Ebenso kann die Vorgehensweise beim zweiten Datensatz 5 ausgestaltet sein: Bei der Generierung eines neuen Bogens 1 können die gesamten Daten, die für die Bearbeitung der vom Bogen 1 begleiteten Waren oder Dienstleistungen relevant sind und zur Ablage im zweiten Datensatz 5 vorgesehen sind, zentral beispielsweise beim Zentralrechner 10 abgefragt werden, wovon dann eine neue, für den neuen Bogen 1 relevante Teilmenge bestimmt und auf dem neuen Bogen 1 im zweiten Datensatz 5 abgelegt wird.

Die verschlüsselte Datenablage im zweiten und dritten Datensatz 6 ermöglicht eine vielfältige Sicherung gegen Missbrauch, Fälschung, unbefugte Benutzung oder dergleichen. Neben Verhinderung des unbefugten Auslesens allein durch die Verschlüsselung der Daten können zusätzliche Sicherungsfunktionen integriert sein. Beispielsweise kann eine magnetische, im Bogen 1 gespeicherte Identitätszeichenkette für die Ver- und Entschlüsselung ggf. in Kombination mit einer in den Kombinationsgeräten 9 abgelegten Identitätszeichenkette herangezogen werden. Alternativ oder zusätzlich ist auch eine Sicherheitsabfrage solcher oder anderer Sicherheitsmerkmale über eine externe, ebenfalls vernetzte Stelle in Form eines Trustcenters oder dergleichen möglich.

## Patentansprüche

1. Verfahren zur Steuerung eines Arbeitsablaufes unter Verwendung eines blattförmigen Bogens (1), wobei der blattförmige Bogen (1) eine in optisch lesbarer Weise beschreibbare Oberfläche (2) aufweist, und wobei der blattförmige Bogen (1) mit flächig verteilten magnetisierbaren Partikel (3) derart versehen ist, dass er mit Daten magnetisch beschreibbar ist und dass die magnetisch gespeicherten Daten vom blattförmigen Bogen (1) lesbar sind, umfassend folgende Verfahrensschritte:
- Auf die Oberfläche (2) des blattförmigen Bogens (1) wird ein erster, optisch lesbarer Datensatz (4) aufgeschrieben;
- Auf den blattförmigen Bogen (1) wird ein zweiter Datensatz (5) magnetisch aufgeschrieben, wobei der zweite Datensatz (5) zumindest eine Teilmenge des ersten, optisch lesbaren Datensatzes (4) enthält;
- Auf den blattförmigen Bogen (1) wird ein dritter Datensatz (6) magnetisch aufgeschrieben, wobei der dritte Datensatz (6) Anweisungen zur Steuerung des den zweiten Datensatz (5) betreffenden Arbeitsablaufes enthält;
- Der dritte, magnetisch gespeicherte Datensatz (6) wird mindestens einmal gelesen, und der Arbeitsablauf wird nach den im dritten Datensatz (6) enthaltenen, nunmehr gelesenen Anweisungen gesteuert.

2. Verfahren nach Anspruch 1,
**dadurch gekennzeichnet, dass** der zweite, magnetisch gespeicherte Datensatz (5) im Laufe des Arbeitsablaufes um Angaben betreffend den Fortschritt des Arbeitsablaufes ergänzt wird.

3. Verfahren nach Anspruch 1 oder 2,
**dadurch gekennzeichnet, dass** der zweite und/oder der dritte Datensatz (5, 6) binär auf den blattförmigen Bogen geschrieben wird.

4. Verfahren nach einem der Ansprüche 1 bis 3,
**dadurch gekennzeichnet, dass** der zweite und/oder der dritte Datensatz (5, 6) codiert auf den blattförmigen Bogen geschrieben wird.

5. Verfahren nach einem der Ansprüche 1 bis 4,
**dadurch gekennzeichnet, dass** der erste Datensatz (4) im Klartext auf den blattförmigen Bogen geschrieben wird.

6. Verfahren nach einem der Ansprüche 1 bis 5,
**dadurch gekennzeichnet, dass** magnetische Schreibvorrichtungen (7) zum Schreiben zumindest des zweiten Datensatzes (5) und magnetische Lesevorrichtungen (8) zum Lesen des zweiten und des dritten Datensatzes (5, 6) an verschiedenen Orten (19, 20, 21) des Arbeitsablaufes vorgesehen und für einen Datenaustausch miteinander vernetzt sind, wobei der blattförmige Bogen (1) im Laufe des Arbeitsablaufes die verschiedenen Orte (19, 20, 21) durchläuft und dabei den magnetischen Schreibvorrichtungen (7) und/oder den magnetischen Lesevorrichtungen (8) zugeführt wird.

7. Verfahren nach Anspruch 6,
**dadurch gekennzeichnet, dass** ein Datenaustausch zwischen Kombinationsgeräten (9) vorgenommen wird, die die magnetische Schreibvorrichtung (7) und die magnetische Lesevorrichtung (8), insbesondere auch eine Druckvorrichtung und/oder eine optische Lesevorrichtung für den ersten Datensatz (4) umfassen.

8. Verfahren nach einem der Ansprüche 1 bis 7,
**dadurch gekennzeichnet, dass** der dritte Datensatz (6) nur eine Teilmenge der Anweisungen zur Steuerung des Arbeitsablaufes enthält, dass die Gesamtmenge der Anweisungen zur Steuerung des Arbeitsablaufes auf einem Zentralrechner (10) abgelegt ist, und dass während desjenigen Arbeitsablaufs oder bei Beendigung desjenigen Arbeitsablaufes, der durch die im dritten Datensatz (6) enthaltenen Teilmenge bestimmt ist, ein weiterer blattförmiger Bogen (1) mit einem neuen dritten Datensatz (6) generiert wird, wobei der neue dritte Datensatz (6) eine weitere Teilmenge der Anweisungen zur Steuerung des Arbeitsablaufes enthält.

9. Verfahren nach einem der Ansprüche 1 bis 8,
**dadurch gekennzeichnet, dass** der zweite Datensatz (5) nur eine Teilmenge der relevanten Daten und insbesondere des ersten, optisch lesbaren Datensatzes (4) enthält, dass die Gesamtmenge der relevanten Daten und insbesondere des ersten, optisch lesbaren Datensatzes (4) zentral insbesondere auf dem Zentralrechner (10) abgelegt ist, und dass während desjenigen Arbeitsablaufs oder bei Beendigung desjenigen Arbeitsablaufes, der die im zweiten Datensatz (5) enthaltenen Teilmenge betrifft, ein weiterer blattförmiger Bogen (1) mit einem neuen zweiten Datensatz (5) generiert wird, wobei der neue zweite Datensatz (5) eine weitere Teilmenge der relevanten Daten und insbesondere des ersten, optisch lesbaren Datensatzes (4) enthält.
